# EUROPÄISCHE PATENTSCHRIFT

(11) **EP 0 754 894 B1**
(45) Veröffentlichungstag und Bekanntmachung des Hinweises auf die Patenterteilung: **28.06.2000**
(21) Anmeldenummer: 96106166.0
(22) Anmeldetag: 19.04.1996
(51) Int. Cl.: F16J 15/34

(54) **Gleitringdichtung für die Laufwerke von Gleiskettenfahrzeugen**
Mechanical seal for the drive of a tracked vehicle
Garniture mécanique d'étanchéité pour l'équipage d'entraînement d'un véhicule chenillé

(30) Priorität: 15.07.1995 DE 19525863
(43) Veröffentlichungstag der Anmeldung: 22.01.1997
(73) Patentinhaber: Federal-Mogul Burscheid GmbH, 51399 Burscheid (DE)
(72) Erfinder: Germann, Erwin, Dipl.-Ing., 86551 Aichach (DE); Neureuter, Lothar, 86316 Friedberg (DE); Zutz, Hans-Henning, Ing., 42929 Wermelskirchen (DE); Veutgen, Hans-Jürgen, 51399 Burscheid (DE)

(56) Entgegenhaltungen:
- EP-A- 0 411 244
- DE-A- 3 311 185
- US-A- 4 094 514
- US-A- 4 531 985

## Beschreibung

Die Erfindung betrifft eine Gleitringdichtung für die Laufwerke von Gleiskettenfahrzeugen und Baumaschinen, aus einem Gußeisen, mit Anteilen der Elemente Kohlenstoff, Silizium, Mangan, Phosphor, Schwefel, Chrom und Vanadium.

Laufwerke von Gleiskettenfahrzeugen und Baumaschinen sind während ihres Betriebs hohen Verschleißbeanspruchungen durch vor allem Staub, Sand, Schlamm und Erdreich ausgesetzt. Zum Schutz vor den starken korrosiven und abrasiven Belastungen müssen vor allem die Lager der Stütz-, Lauf- und Umlenkrollen bei Gleiskettenmaschinen und die Naben und Achsen bei Räderlaufwerken mit Dichtungen abgedichtet werden. Solche Dichtungen sind bevorzugt Gleitringdichtungen, bei denen zwei metallische Gleitringe gleicher Abmessungen in Gummirundringen elastisch gelagert und von diesen axial aneinandergepreßt aufeinander laufen. Die Laufflächen der Gleitringe sind geläppt.

Entsprechend der starken abrasiven und korrosiven Belastung im Betrieb werden für die Gleitringe entsprechend verschleißbeständige Werkstoffe verwendet. Dies sind in erster Linie harte Gußwerkstoffe aus Stelliten und nickelhaltigen ledeburitisch erstarrten weißen Gußeisenlegierungen. Die hohe Härte dieser Gußwerkstoffe ermöglicht aber nur die schleifende Bearbeitung der Ringe, so daß die Ringe zur Minimierung der aufwendigen Schleifarbeit möglichst formgenau in verteuernden komplizierten Gußververfahren gegossen werden müssen. Aus dem Deutschen Gebrauchsmuster 89 15 632 ist eine solche Gleitringdichtung zu entnehmen.

Preiswertere Ringe können aus Chromstählen durch Gesenkschmieden oder Formpressen hergestellt werden. Die Nachbearbeitung der Ringrohlinge ist aber auch hier nur durch aufwendiges Schleifen möglich, so daß man bei preiswerten Ringen zur Minimierung der Herstellungskosten auf ein aufwendiges Schleifen unter bewußter Inkaufnahme qualitativer Mängel verzichtet.

Aus der US 4094514 ist eine solche Gußeisenlegierung bekannt. Diese Legierung weist einen relativ hohen Chromanteil auf, wodurch eine hohe Härte des Materials erzielt wird, jedoch mit dem Nachteil einer aufwendigen Nachbearbeitung.

Der vorliegenden Erfindung liegt daher die Aufgabe zugrunde, Gleitringdichtungen gemäß Oberbegriff des Hauptpatentanspruchs zu finden, deren Gleitringe aus einem Gußeisen bestehen, der bei ausreichender Beständigkeit gegenüber abrasiviem und korrosivem Verschleiß einfach und kostengünstig zu bearbeiten ist.

Erfindungsgemäß wird diese Aufgabe durch eine Gleitringdichtung für Laufwerke gelöst, deren Gleitringe aus einem grauen Gußeisen mit lamellarer Graphitausscheidung in perlitischer Matrixstruktur aus
2,0 - 4,0 Gewichtsprozent Kohlenstoff
1,5 - 6,0 Gewichtsprozent Silizium
0,2 - 2,5 Gewichtsprozent Mangan
max. 2,0 Gewichtsprozent Phosphor
max. 0,15 Gewichtsprozent Schwefel
0,2 - 4,0 Gewichtsprozent Chrom
0,05 - 3,0 Gewichtsprozent Vanadium
0,05 - 4,0 Gewichtsprozent Kupfer
und Eisen als Rest
bestehen.

Mit der erfindungsgemäßen Gußeisenlegierung wurden Gleitringrohlinge der Gleitringdichtungen gegossen und zu Gleitringen fertig bearbeitet. Die Gleitringe wurden zu Gleitringdichtungen zusammengebaut und in Prüfstandsläufen getestet.

Es zeigte sich als besonders vorteilhaft, daß
1. die erhaltenen Gußeisengefüge der Rohlinge auch bei schwierigen Gußstückgeometrien gleichmäßig graue Gußstrukturen waren
2. die Ringrohlinge aufgrund ihrer Härte zwischen etwa 100 und 120 HRB problemlos und wenig aufwendig spanabhebened bearbeitbar waren, so daß auch auf komplizierte Formgebungsverfahren beim Gießen verzichtet werden konnte
3. die Ringe in einem Trockenlauf-Verschleißtest über 1000 Stunden aufgrund ihres Graphitgehaltes gegenüber herkömmlichen Gleitringen einen verringerten Verschleiß aufweisen
4. die Ringe in einem 1000 Stunden Schmutzwasserprüfstandtest keinen sichtbaren korrosiven und abrasiven Verschleiß aufwiesen und damit in ihrem Verschleißverhalten etwa dem von herkömmlichen handelsüblichen Ringen entsprachen.

Durch die Erfindung ist somit eine Gleitringdichtung für die Laufwerke von Gleitskettenfahrzeugen und Baumschinen geschaffen, die einfach und kostengünstig bei gleichzeitiger guter Beständigkeit gegenüber abrasivem und korrosivem Verschleiß herzustellen ist.

In weiteren Versuchen wurde gefunden, daß die erfindungsgemäße Gußeisenlegierung zur weiteren Erhöhung ihrer Verschleißfestigkeit zusätzlich mindestens eines der Elemente Nickel, Kobalt, Molybdän, Wolfram, Aluminium, Zinn, gebundenem Stickstoff, Titan, Niob, Tantal und Bor in Mengen von maximal 8 Gewichtsprozent enthalten kann.

Zur Steigerung seiner Verschleißbeständigkeit können zusätzlich die Ringe einer Anlaßbehandlung bei maximal 705 °C und/oder einer Abschreckvergütung bei maximal 1050 °C unterzogen werden.

Aufgrund seines Chromgehaltes ist der erfindungsgemäße Gußeisenwerkstoff sehr gut nitrierbar und es wurde gefunden, daß seine abrasive und korrosive Verschleißbeständigkeit in herkömmlichen Nitrier- oder Nitriercarbonierverfahren, wie badnitrieren, gasnitrieren, plasmanitrieren oder pulsplasmanitrieren wesentlich gesteigert werden kann.

Vorteilhaft möglich ist auch die Verwendung der erfindungsgemäß eingesetzten Gußeisenlegierung für die Herstellung weiterer Dichtungen im Maschinenbau und für Verbrennungskraftmaschinen, wie Dichtungspackungen oder Klein- bis Großkolbenringe sowie für die Herstellung von Zylinderlaufbüchsen im Standguß oder Schleuderguß.

Die Erfindung wird durch ein Ausführungsbeispiel näher erläutert.

Im Sandgußverfahren wurden Gleitringrohlinge für Gleitringdichtungen für Laufwerke aus einer Gußeisenlegierung aus
2,99 Gewichtsprozent Kohlenstoff
4,61 Gewichtsprozent Silizium
0,77 Gewichtsprozent Mangan
0,53 Gewichtsprozent Phosphor
0,039 Gewichtsprozent Schwefel
1,7 Gewichtsprozent Chrom
0,81 Gewichtsprozent Vanadium
1,86 Gewichtsprozent Kupfer und
Eisen als Rest
gegossen. Das Gußgefüge der Ringe war perlitisch mit gleichmäßig verteilter lamellarer Graphitausscheidung. Die Härte der Ringe lag bei 110 HRB.

Die Ringrohlinge wurden durch Drehen der Umfangsflächen und Läppen der Laufflächen fertig bearbeitet.

Im Einbauzustand weisen die Gleitringe auf dem 1000 Stunden Schmutzwasserprüfstandtest und dem 1000 Stunden Trockenlaufverschleißtest Verschleißwerte auf, die etwa den Werten herkömmlicher Ringe aus Stelliten, Nickelhartgußeisenlegierungen und Chromstählen entsprachen.

## Patentansprüche

1. Gleitringdichtung für die Laufwerke von Gleiskettenfahrzeugen und Baumaschinen aus einem Gußeisen mit Anteilen der Elemente Kohlenstoff, Silizium, Mangan, Phosphor, Schwefel, Chrom und Vanadium, dadurch gekennzeichnet, daß die Gleitringe aus einem grauen Gußeisen mit lamellarer Graphitausscheidung in perlitischer Matrixstruktur bestehen, welches aus
2,0 - 4,0 Gewichtsprozent Kohlenstoff
1,5 - 6,0 Gewichtsprozent Silizium
0,2 - 2,5 Gewichtsprozent Mangan
max. 2,0 Gewichtsprozent Phosphor
max. 0,15 Gewichtsprozent Schwefel
0,2 - 4,0 Gewichtsprozent Chrom
0,05 - 3,0 Gewichtsprozent Vanadium
0,05 - 4,0 Gewichtsprozent Kupfer sowie
Eisen als Rest
besteht.

2. Gleitringdichtung nach Anspruch 1, dadurch gekennzeichnet, daß die Gußeisenlegierung zusätzlich mindestens eines der Elemente Nickel, Kobalt, Molybdän, Wolfram, Aluminium, Zinn, gebundenem Stickstoff, Titan, Niob, Tantal und/oder Bor mit einem Anteil von insgesamt maximal 8 Gewichtsprozent enthält.

3. Gleitringdichtung nach mindestens einem der Ansprüche 1 oder 2, dadurch gekennzeichnet, daß die Gleitringe einer Anlaßbehandlung bei maximal 750 °C und/oder einer Abschreckbehandlung bei maximal 1050 °C unterzogen sind.

4. Gleitringdichtung nach mindestens einem der Ansprüche 1 bis 3, dadurch gekennzeichnet, daß die Gleitringe ganz oder teilweise nach einem der bekannten Verfahren nitriert oder nitrocarburiert sind.

5. Verwendung der Gußeisenlegierung nach mindestens einem der Ansprüche 1 und 2, für die Herstellung von Packungsringen oder Kolbenringen für Verbrennungskraftmaschinen oder Armaturen.

6. Verwendung der Gußeisenlegierung nach mindestens einem der Ansprüche 1 und 2, für die Herstellung von Zylinderlaufbüchsen im Standguß oder Schleuderguß.

## Claims

1. Mechanical seal for the drives of tracked vehicles and building machinery, said seal being formed from a cast iron with proportions of the elements carbon, silicon, manganese, phosphorous, sulphur, chromium and vanadium, **characterised in that** the sliding rings consist of a grey cast iron with lamellar graphite deposition in a pearlitic matrix structure, which consists of
2.0 - 4.0% by weight carbon
1.5 - 6.0% by weight silicon
0.2 - 2.5% by weight manganese
max. 2.0% by weight phosphorous
max. 0.15% by weight sulphur
0.2 - 4.0% by weight chromium
0.05 - 3.0% by weight vanadium
0.05 - 4.0% by weight copper and
iron as the remainder.

2. Mechanical seal according to claim 1, **characterised in that** the cast iron alloy contains in addition at least one of the elements nickel, cobalt, molybdenum, wolfram, aluminium, tin, bound nitrogen, titanium, niobium, tantalum and/or boron in a proportion of altogether a maximum of 8% by weight.

3. Mechanical seal according to at least one of claims 1 or 2, **characterised in that** the sliding rings are subjected to a tempering treatment at a maximum of 750°C and/or quenching treatment at a maximum of 1050°C.

4. Mechanical seal according to at least one of claims 1 to 3, **characterised in that** the sliding rings are completely or partially nitrided or nitrocarburized according to one of the known methods.

5. Use of the cast iron alloy according to at least one of claims 1 and 2 for manufacturing packing rings or piston rings for combustion engines or fittings.

6. Use of the cast iron alloy according to at least one of claims 1 and 2 for manufacturing cylinder liners by gravity casting or spin casting.

## Revendications

1. Garniture mécanique d'étanchéité à anneaux coulissants pour l'équipage d'entraînement d'un véhicule chenillé et de machines de construction réalisée en une fonte de fer et comprend les éléments carbone, silicium, manganèse, phosphore, soufre, chrome et vanadium, caractérisé en ce que les anneaux de glissement sont constitués à partir d'une fonte de fer grise avec une précipitation de graphite lamellaire dans une structure de matrice perlitique, qui est constituée de :
2,0 - 4,0 % en poids de carbone
1,5 - 6,0 % en poids de silicium
0,2 - 2,5 % en poids de manganèse
max. 2,0 % en poids de phosphore
max. 0,15 % en poids de soufre
0,2 - 4,0 % en poids de chrome
0,05 - 3,0 % en poids de vanadium
0,05 - 4,0 % en poids de cuivre,
avec le reste en fer.

2. Garniture mécanique d'étanchéité selon la revendication 1, caractérisée en ce que l'alliage de fonte de fer contient en outre un des éléments suivants : nickel, cobalt, molybdène, tungstène, aluminium, zinc, azote fixé, titane, niobium, tantale et/ou bore avec une teneur totale maximale de 8% en poids.

3. Garniture mécanique d'étanchéité selon l'une au moins des revendications 1 ou 2, caractérisée en ce que les anneaux de glissement sont soumis à un traitement de revenu avec une température maximale de 750°C et/ou un traitement de trempe avec une température maximale de 1 050°C.

4. Garniture mécanique d'étanchéité selon l'une au moins des revendications 1 à 3, caractérisée en ce que les anneaux de glissement sont partiellement ou totalement nitrurés ou nitrocarburés selon un procédé connu.

5. Utilisation d'une garniture d'étanchéité mécanique selon l'une des revendications 1 et 2, pour la fabrication de bagues d'étoupage ou de segments de piston pour machines à combustion interne ou armatures.

6. Utilisation de l'alliage de fonte de fer selon au moins une des revendications 1 et 2, pour la fabrication de chemises de cylindre en coulée debout ou coulée centrifuge.
